# EUROPÄISCHE PATENTSCHRIFT

(11) **EP 1 776 258 B1**
(45) Veröffentlichungstag und Bekanntmachung des Hinweises auf die Patenterteilung: **12.01.2011**
(21) Anmeldenummer: 05782041.7
(22) Anmeldetag: 10.08.2005
(51) Int. Cl.: B60R 21/20

(54) **FAHRZEUGSITZ MIT EINER SEITENAIRBAGEINRICHTUNG**
VEHICLE SEAT WITH LATERAL AIRBAG DEVICE
SIÈGE DE VÉHICULE AVEC SYSTEME D'AIRBAG LATERAL

(30) Priorität: 13.08.2004 DE 102004040236
(43) Veröffentlichungstag der Anmeldung: 25.04.2007
(73) Patentinhaber: TAKATA - PETRI AG, 63743 Aschaffenburg (DE)
(72) Erfinder: KLIMA, Josef, 89075 Ulm (DE); SIEVERS, Thomas, 89081 Ulm (DE)
(74) Vertreter: Baumgärtel, Gunnar
(86) Internationale Anmeldenummer: PCT/DE2005/001432
(87) Internationale Veröffentlichungsnummer: WO 2006/015591

(56) Entgegenhaltungen:
- EP-A- 0 856 438
- EP-A- 1 010 591
- DE-U1- 20 318 978
- US-A- 5 556 129
- US-A1- 2002 063 452

## Beschreibung

Die Erfindung bezieht sich auf einen Fahrzeugsitz mit einer Seitenairbageinrichtung mit den Merkmalen gemäß dem Oberbegriff des Anspruchs 1.

Ein derartiger Fahrzeugsitz ist aus der Europäischen Patentanmeldung EP 0 856 438 bekannt. Bei diesem Sitz ist der Sitzbezug derart ausgestaltet, dass er dem sich entfaltenden Gassack hilft, in eine vorgegebene Position zu kommen, und diesen nachfolgend in der vorgegebenen Position hält.

Ein anderer Fahrzeugsitz mit Seitenairbageinrichtung ist beispielsweise aus der US-Patentschrift 5,498,030 bekannt. Diese vorbekannte Seitenairbageinrichtung weist einen Gassack auf, der in einer flexiblen Gassackhülle im Sitzinneren eines Fahrzeugsitzes, also unterhalb des Sitzbezuges, montiert ist. Im Falle eines Unfalls wird der Gassack aufgeblasen, so dass die flexible Gassackhülle an einer dafür vorgesehenen Reißnaht aufbricht und den Gassack frei gibt. Nachfolgend reißt dann der Sitzbezug des Fahrzeugsitzes an einer ebenfalls dafür vorgesehenen Reißnaht auf, so dass der Gassack das Sitzinnere verlassen und sich außerhalb des Fahrzeugsitzes entfalten kann. Bei der vorbekannten Seitenairbageinrichtung ist die flexible Gassackhülle mit einem "Rinnen"- bzw. "Rutschen"-Bereich ausgestattet, der eine gewisse Führung des Gassacks beim Aufblasen bewirkt.

Darüber hinaus ist in der US-Patentschrift 5,630,616 eine Seitenairbageinrichtung mit zwei separaten Gassäcken beschrieben. Der eine der beiden Gassäcke ist im Sitzlehnenbereich angeordnet und schützt den Oberkörperbereich des Fahrzeuginsassen. Der andere der beiden Gassäcke ist im unteren Sitzbereich des Fahrzeugsitzes angeordnet und schützt nach einem Entfalten den unteren Körperbereich des Fahrzeuginsassen.

Der Erfindung liegt die Aufgabe zugrunde, einen Fahrzeugsitz mit einer Seitenairbageinrichtung anzugeben, die einen besonders zuverlässigen Schutz des Fahrzeuginsassen im Falle eines Unfalls bewirkt.

Diese Aufgabe wird ausgehend von einem Fahrzeugsitz mit einer Seitenairbageinrichtung der vorbekannten Art erfindungsgemäß durch das kennzeichnende Merkmal des Anspruchs 1 gelöst.

Vorteilhafte Ausgestaltungen des erfindungsgemäßen Fahrzeugsitzes sind in Unteransprüchen angegeben.

Ein wesentlicher Vorteil des erfindungsgemäßen Sitzes ist darin zu sehen, dass bei dieser aufgrund der Positionierwirkung des Sitzbezuges eine stets optimale Position des entfalteten Gassacks erreicht wird, so dass der Fahrzeuginsasse durch den Gassack im Falle eines Unfalls sehr gut geschützt wird. Eine schlechte Funktion der Rückhaltewirkung des Gassacks durch eine unbestimmte bzw. nichtvorhersehbare Position des Gassacks wird also vermieden, zumindest weitgehend reduziert.

Ein weiterer wesentlicher Vorteil des erfindungsgemäßen Sitzes besteht darin, dass bei dieser auch sehr große Gassäcke sicher positioniert werden, beispielsweise Gassäcke, die für einen Thorax- und Pelvis-Schutz und/oder Head- und Thorax-Schutz und/oder Head-Thorax-Pelvis-Schutz eingesetzt werden.

Gemäß einer vorteilhaften Ausgestaltung der Seitenairbageinrichtung ist vorgesehen, dass zumindest zwei durch einen nichtaufreißenden Sitzbezugabschnitt getrennte Reißnahtabschnitte im Sitzbezug vorhanden sind, wobei zumindest ein Teilbereich bzw. Abschnitt des entfalteten Gassacks unterhalb des nichtaufreißenden Sitzbezugabschnittes festgehalten wird. Dadurch, dass ein "nichtaufreißender" Sitzbezugabschnitt vorhanden ist, wird der Gassack abschnittsweise im Sitzinneren festgehalten und somit dort fest positioniert; die übrigen Gassackbereiche, die sich außerhalb des Fahrzeugsitzes entfalten, werden dadurch "mitabgestützt" und ebenfalls positioniert. Auch im Falle eines schweren Unfalls bleibt der entfaltete Gassack somit in der für den Unfallfall vorgesehenen Schutzposition.

Gemäß einer weiteren vorteilhaften Ausgestaltung der Seitenairbageinrichtung ist vorgesehen, dass im Bereich der Reißnaht zumindest ein Stützelement am Sitzbezug derart befestigt ist, dass der im Bereich des Stützelements befindliche Gassackbereich von diesem und damit vom Sitzbezug abgestützt und/oder gehalten wird. Besonders bevorzugt handelt es sich bei dem Stützelement um einen Stützsack, der derart am Sitzbezug befestigt ist, dass sich der diesem zugeordnete - z. B. in dessen unmittelbarer Nähe befindliche - Gassackbereich des Gassacks in den Stützsack hinein entfaltet und diesen beim Entfalten aus dem Sitzinneren nach außen herausstülpt.

Das Stützelement bzw. der Stützsack können beispielsweise am Sitzbezug an- bzw. eingenäht sein.

Als besonders vorteilhaft wird es angesehen, wenn ein "nichtaufreißender" Sitzbezugabschnitt mit einem Stützelement kombiniert wird. Es wird somit als vorteilhaft angesehen, wenn die Reißnaht des Sitzbezuges zumindest zwei durch einen "nichtaufreißenden" Sitzbezugabschnitt getrennte Reißnahtabschnitte aufweist, wobei zumindest ein Gassackbereich des Gassacks unterhalb des nichtaufreißenden Sitzbezugabschnitts (also im Sitzinneren) festgehalten wird und wobei am Sitzbezug außerdem zumindest ein Stützelement derart befestigt ist, dass ein aus dem Sitzinneren heraustretender Gassackbereich zusätzlich positioniert bzw. "abgestützt" wird. Bei dem Stützelement kann es sich beispielsweise um einen vorzugsweise im Sitzinneren angeordneten Stützsack handeln, so dass sich der im Bereich des Stützsacks befindliche Gassackbereich in den Stützsack hinein entfaltet und diesen hierbei aus dem Sitzinneren herausstülpt.

Gemäß einer anderen vorteilhaften Ausgestaltung der Seitenairbageinrichtung ist vorgesehen, dass im Sitzbezug zumindest zwei Reißnahtabschnitte vorhanden sind, die ein unterschiedliches Aufreißverhalten aufweisen. Vorzugsweise erfordert einer der zumindest zwei Reißnahtabschnitte eine größere Aufreißkraft als der andere Reißnahtabschnitt.

Beispielsweise sind im Sitzbezug zwei äußere Reißnahtabschnitte vorhanden, die durch einen dazwischen liegenden, sozusagen inneren, Reißnahtabschnitt getrennt sind, wobei der dazwischen liegende Reißnahtabschnitt eine größere Aufreißkraft als die zwei äußeren Reißnahtabschnitte erfordert. Der dazwischen liegende Reißnahtabschnitt reißt während des Entfaltens des Gassacks erst nach dem Aufreißen der zwei äußeren Reißnahtabschnitte auf und hält einen Teilabschnitt des Gassacks zumindest während einer ersten Phase des Entfaltungsvorgangs des Gassacks zunächst im Inneren des Fahrzeugsitzes zurück.

Das unterschiedliche Aufreißverhalten der Reißnahtabschnitte beruht bevorzugt zumindest auch darauf, dass sich der Stichabstand der Reißnähte unterscheidet. Alternativ oder zusätzlich kann das unterschiedliche Aufreißverhalten der Reißnahtabschnitte zumindest auch darauf beruhen, dass die Reißnahtabschnitte mit einer unterschiedlichen Anzahl an Reißnähten ausgestattet sind.

Außerdem bezieht sich die Erfindung auf ein Verfahren gemäß Anspruch 10 zum Schützen eines Fahrzeuginsassen, bei dem ein in einem Fahrzeugsitz integrierter Gassack im Falle eines Unfalls aufgeblasen wird, wobei zumindest eine Reißnaht aufgerissen wird, durch die sich der Gassack entfaltet.

Um bei einem solchen Verfahren einen besonders zuverlässigen Schutz des Fahrzeuginsassen im Falle eines Unfalls zu erreichen, ist erfindungsgemäß vorgesehen, dass mit dem Sitzbezug des Fahrzeugsitzes eine Positionierung des sich entfaltenden Gassacks und/oder eine Positionierung des bereits entfalteten Gassacks durchgeführt wird. Es handelt sich also um eine aktive, gezielte Einflussnahme auf die Position des Gassacks mit Hilfe des Sitzbezuges. Vorteilhafte Ausgestaltungen des erfindungsgemäßen Verfahrens sind in Unteransprüchen angegeben.

Zur Erläuterung der Erfindung zeigen
- Fig. 1: ein erstes Ausführungsbeispiel für eine erfindungsgemäße Seitenairbageinrichtung und für einen erfindungsgemäßen Fahrzeugsitz; bei diesem Ausführungsbeispiel wird der entfaltete Gassack durch einen "nichtaufreißenden" Sitzbezugabschnitt gehalten,
- Fig. 2: ein zweites Ausführungsbeispiel für einen erfindungsgemäßen Fahrzeugsitz bzw. eine erfindungsgemäße Seitenairbageinrichtung, bei der eine Positionierung des Gassacks durch einen am Sitzbezug angebrachten Stützsack bewirkt wird, in den hinein sich der Gassack zumindest abschnittsweise entfaltet, und
- Fig. 3 bis 5: ein drittes Ausführungsbeispiel für einen erfindungsgemäßen Fahrzeugsitz bzw. eine erfindungsgemäße Seitenairbageinrichtung, bei der eine Positionierung des Gassacks durch zeitlich unterschiedlich aufreißende Reißnahtabschnitte bewirkt wird.

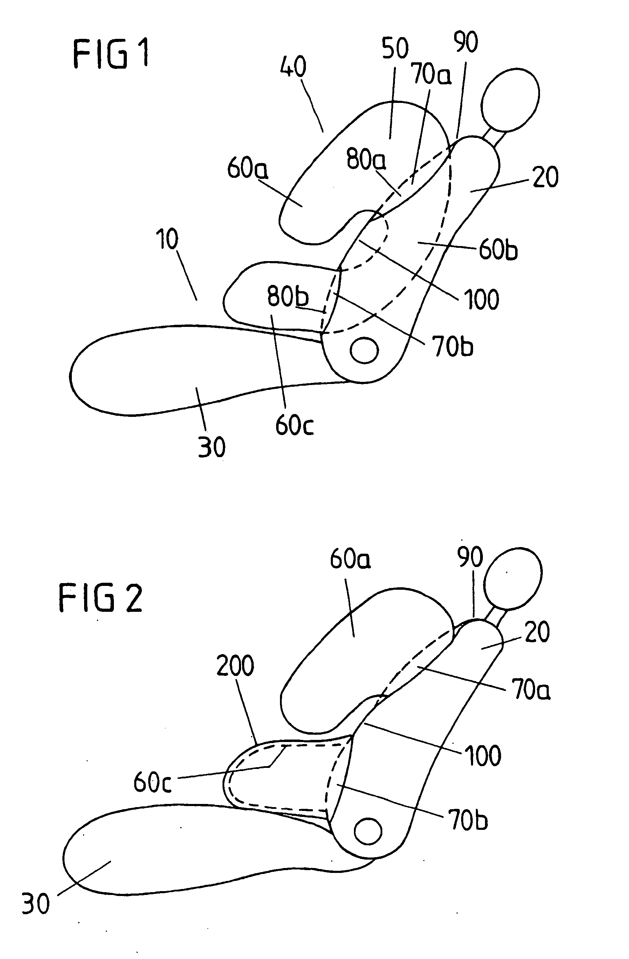

In der Figur 1 ist ein Fahrzeugsitz 10 mit einer Rückenlehne 20 und einem unteren Sitzabschnitt 30 dargestellt. Im Bereich der Rückenlehne 20 ist eine Seitenairbageinrichtung 40 mit einem Gassack 50 angeordnet. Die Figur 1 zeigt dabei den Fahrzeugsitz 10 bzw. die Seitenairbageinrichtung 40 nach Eintritt eines Unfallereignisses, so dass der Gassack 50 bereits entfaltet ist.

Es lässt sich in der Figur 1 erkennen, dass der Gassack 50 drei zusammenhängende Gassackbereiche 60a, 60b und 60c aufweist. Der obere Gassackbereich 60a - beispielsweise ein Thorax-Abschnitt - sowie der untere Gassackbereich 60c - beispielsweise ein Pelvis-Abschnitt - treten aus dem Bereich der Rückenlehne 20 durch Öffnungen 70a und 70b hindurch. Diese Öffnungen 70a und 70b werden gebildet, sobald sich der Gassack 50 entfaltet und dadurch zwei Reißnähte bzw. Reißnahtabschnitte 80a und 80b im Sitzbezug 90 des Fahrzeugsitzes 10 aufreißen. Sobald die Reißnähte im Sitzbezug 90 aufgerissen sind, treten die beiden Gassackbereiche 60a und 60c aus der Rückenlehne heraus.

Wie sich in der Figur 1 erkennen lässt, sind die beiden Reißnahtabschnitte 80a und 80b voneinander durch einen Sitzbezugabschnitt 100 des Sitzbezugs 90 getrennt, der nicht aufreißt. Dieser Sitzbezugabschnitt 100 wird nachfolgend als "nichtaufreißender" Sitzbezugabschnitt bezeichnet. Aufgrund der Tatsache, dass der Sitzbezug 90 im Sitzbezugabschnitt 100 nicht aufreißt, kann der Gassack 50 in diesem Bereich die Rückenlehne 20 nicht verlassen. Es kommt im Bereich des nichtaufreißenden Sitzbezugabschnitts 100 somit zu einem Festhalten des Gassacks 50 im Inneren des Fahrzeugsitzes, wodurch der innere Gassackbereich 60b gebildet wird. Das Festhalten des inneren Gassackbereichs 60b ruft eine Stützwirkung hervor, durch die der voll entfaltete Gassack 50 relativ zur Rückenlehne 20 fest positioniert und abgestützt wird; auch die beiden Gassackbereiche 60a und 60c werden dadurch - zumindest mittelbar - fest gehalten und positioniert. Die beiden Gassackbereiche 60a und 60c können somit ihre Schutzwirkung gegenüber einem Fahrzeuginsassen in optimaler Weise sicherstellen.

In der Figur 2 ist ein weiteres Ausführungsbeispiel für eine erfindungsgemäße Seitenairbageinrichtung bzw. einen erfindungsgemäßen Fahrzeugsitz dargestellt. Die Seitenairbageinrichtung 40 gemäß der Figur 2 entspricht im Wesentlichen der Seitenairbageinrichtung 40 gemäß Figur 1. Zusätzlich ist im Bereich des unteren Gassackbereiches 60c des Gassacks 50 ein Stützsack bzw. "Innensack" vorgesehen, der am Sitzbezug 90 der Rückenlehne 20 angebracht, beispielsweise angenäht ist. Sobald der Gassack 50 im Falle eines Fahrzeugunfalls von einem in den Figuren 1 und 2 nicht weiter dargestellten Gasgenerator aufgeblasen wird, wird sich der untere Gassackbereich 60c in den Stützsack 200 hinein entfalten und diesen aus dem Sitzinneren bzw. dem Sitzbezug 90 herausstülpen. Anschließend wird der untere Gassackbereich 60c weiter aufgeblasen und den Stützsack 200 füllen. Der sich ergebende Endzustand nach einem vollständigen Aufblasen des Gassacks 50 ist in der Figur 2 dargestellt.

Anstelle einer Anordnung des Stützsackes im Inneren des Fahrzeugsitzes wäre im Übrigen auch eine Anordnung außerhalb denkbar.

Im Zusammenhang mit der Figur 2 wurde oben eine Kombination bestehend aus einem Stützsack 200 und einem nichtaufreißendem Sitzbezugabschnitt 100 vorgestellt. Alternativ ist es ebenfalls möglich, allein einen Stützsack 200 zum Abstützen des Gassacks 50 zu verwenden und auf einen "nichtaufreißenden" Sitzbezugabschnitt 100, wie er im Zusammenhang mit den Figuren 1 und 2 erläutert wurde, zu verzichten.

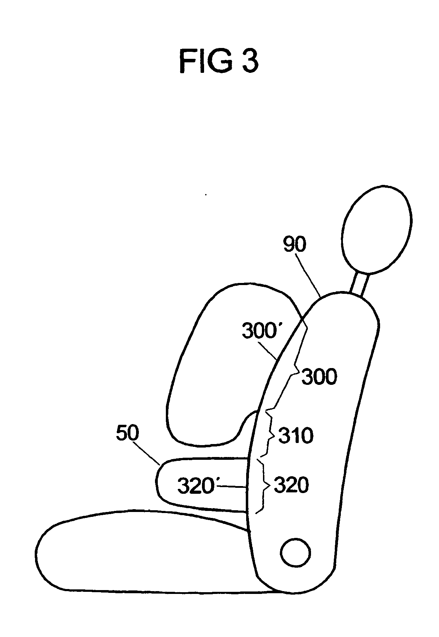

In der Figur 3 ist ein drittes Ausführungsbeispiel für eine Seitenairbageinrichtung gezeigt. Bei diesem dritten Ausführungsbeispiel sind im Sitzbezug 90 drei Reißnahtabschnitte 300, 310 und 320 vorhanden. Die beiden äußeren Reißnahtabschnitte 300 und 320 weisen ein anderes Aufreißverhalten als der innere bzw. dazwischen liegende Reißnahtabschnitt 310 auf; konkret erfordert der dazwischen liegende Reißnahtabschnitt 310 eine größere Aufreißkraft als die beiden äußeren Reißnahtabschnitte 300 und 320. Um eine größere Aufreißkraft für den dazwischen liegende Reißnahtabschnitt 310 zu erreichen, ist dieser beispielsweise mit einem kleineren Stichabstand und damit mit einer größeren Stichdichte ausgestattet als die beiden äußeren Reißnahtabschnitte 300 und 320. Alternativ oder zusätzlich ist der dazwischen liegende Reißnahtabschnitt 310 mit einer größeren Anzahl an Reißnähten ausgestattet als die beiden äußeren Reißnahtabschnitte 300 und 320.

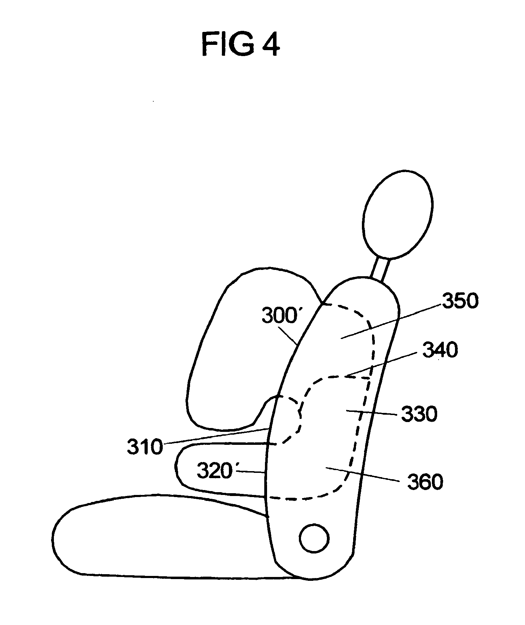

Aufgrund der größeren erforderlichen Aufreißkraft im dazwischen liegenden Reißnahtabschnitt 310 reißen während des Entfaltens des Gassacks 50 erst die zwei äußeren Reißnahtabschnitte 300 und 320 auf, so dass sich der Gassack zunächst ausschließlich durch Öffnungen 300' und 320' entfalten kann. Ein Teilabschnitt 330 des Gassacks 50 wird somit während einer ersten Phase des Entfaltungsvorgangs des Gassacks zunächst im Inneren des Fahrzeugsitzes zurückgehalten; dies zeigt die Figur 4 im Detail.

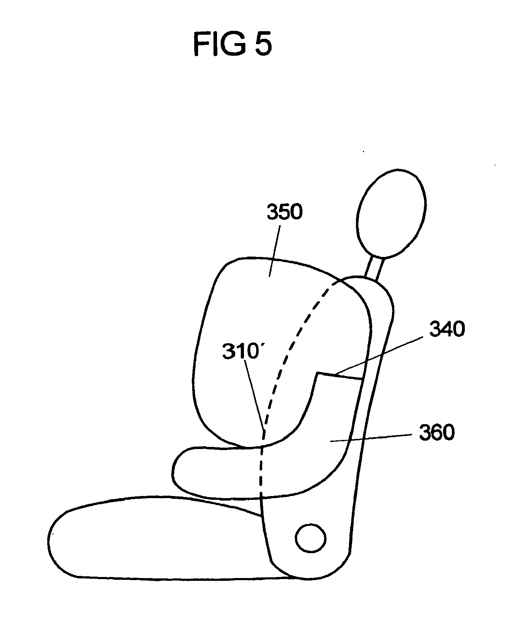

Aufgrund dieses Zurückhaltens des Teilabschnitts 330 wird der Entfaltungsvorgang des Gassacks 50 gesteuert, so dass dieser - bei entsprechender Ausgestaltung der Reißnahtabschnitte 300 bis 320 - in die gewünschte Position gebracht wird. Erst nach Abschluss dieser ersten Positionierungsphase reißt der dazwischen liegende Reißnahtabschnitt 310 auf, so dass eine weitere Öffnung 310' entsteht, die die beiden äußeren Öffnungen 300' und 320' verbindet; dabei reißt der dazwischen liegende Reißnahtabschnitt 310 erst auf, nachdem die stabile Position des Gassacks 50 gesichert ist (vgl. Fig. 5).

Nachdem der dazwischen liegende Reißnahtabschnitt 310 geöffnet ist, ermöglicht die weitere Öffnung 310' dem Gassack 50, seine maximale Wirkdicke aufzubauen und sein maximales Schutzpotenzial zur Verfügung zustellen.

In der Figur 4 erkennt man außerdem einen Trennabschnitt 340, der den Gassack 50 in eine obere Gassackkammer 350 und in eine untere Gassackkammer 360 unterteilt. Dieser Trennabschnitt 340 kann gasdicht oder gasdurchlässig ausgeführt sein. Ein entsprechender Trennabschnitt zwischen der oberen Gassackkammer und der unteren Gassackkammer kann im Übrigen auch bei dem ersten und dem zweiten Ausführungsbeispiel gemäß den Figuren 1 und 2 vorhanden sein.

### Bezugszeichenliste

- 10: Fahrersitz
- 20: Rückenlehne
- 30: unterer Sitzabschnitt
- 40: Seitenairbageinrichtung
- 50: Gassack
- 60a: oberer Gassackbereich
- 60b: innerer Gassackbereich
- 60c: unterer Gassackbereich
- 70a: obere Öffnung
- 70b: untere Öffnung im Sitzbezug
- 80a: obere Reißnaht
- 80b: untere Reißnaht
- 90: Sitzbezug
- 100: nichtaufreißender Sitzbezugabschnitt
- 200: Stützsack
- 300: äußerer Reißnahtabschnitt
- 300': Öffnung
- 310: innerer Reißnahtabschnitt
- 310': Öffnung
- 320: äußerer Reißnahtabschnitt
- 320': Öffnung
- 330: Teilabschnitt
- 340: Trennabschnitt
- 350: obere Gassackkammer
- 360: untere Gassackkammer

## Patentansprüche

1. Fahrzeugsitz mit einer Seitenairbageinrichtung (40) mit einem in einem Fahrzeugsitz (10) unterhalb eines Sitzbezugs (90) des Fahrzeugsitzes (10) montierten Gassack (50), der im Falle eines Fahrzeugunfalls aufgeblasen wird, wobei der Sitzbezug (90) zumindest eine Reißnaht (70a, 70b) aufweist, die durch den sich entfaltenden Gassack (50) aufgerissen wird und ein Austreten des Gassacks (50) aus dem Fahrzeugsitz (10) ermöglicht, wobei der Sitzbezug (90) derart ausgestaltet ist, dass er dem sich entfaltenden Gassack (50) hilft, in eine vorgegebene Position zu kommen, oder den entfalteten Gassack (50) in der vorgegebenen Position hält.
**dadurch gekennzeichnet,**
**dass** im Sitzbezug (90) zumindest zwei Reißnahtabschnitte (80a, 80b) vorhanden sind, die durch einen nichtaufreißenden Sitzbezugabschnitt (100) getrennt sind, wobei zumindest ein Teilabschnitt (60b) des Gassacks (50) durch den nichtaufreißenden Sitzbezugabschnitt (100) im Inneren des Fahrzeugsitzes (10) zurückgehalten wird,
oder dass im Sitzbezug (90) zwei äußere Reißnahtabschnitte (300, 320) vorhanden sind, die durch einen dazwischen liegenden Reißnahtabschnitt (310) getrennt sind, wobei der dazwischen liegende Reißnahtabschnitt eine größere Aufreißkraft als die zwei äußeren Reißnahtabschnitte aufweist und wobei der der dazwischen liegende Reißnahtabschnitt während des Entfaltens des Gassacks erst nach dem Aufreißen der zwei äußeren Reißnahtabschnitte aufreißt und zumindest einen Teilabschnitt (330) des Gassacks (50) während einer ersten Phase des Entfaltungsvorgangs des Gassacks zunächst im Inneren des Fahrzeugsitzes (10) zurückhält.

2. Fahrzeugsitz nach Anspruch 1, **dadurch gekennzeichnet, dass** im Bereich der Reißnaht (80a, 80b) zumindest ein Stützelement derart am Sitzbezug befestigt ist, dass der die Reißnaht (80b) aufreißende Gassackbereich (60) durch das Stützelement abgestützt wird.

3. Fahrzeugsitz nach Anspruch 2, **dadurch gekennzeichnet, dass** das Stützelement am Sitzbezug (90) angenäht ist.

4. Fahrzeugsitz nach Anspruch 2 oder 3, **dadurch gekennzeichnet, dass** das Stützelement durch einen Stützsack gebildet ist, wobei der Stützsack im Bereich der Reißnaht (80b) derart am Sitzbezug befestigt ist, dass sich der dem Stützsack (200) zugeordnete Gassackbereich (60c) des Gassacks (50) in den Stützsack (200) hinein entfaltet und diesen dabei aus dem Sitzinneren nach außen herausstülpt.

5. Fahrzeugsitz nach Anspruch 1, **dadurch gekennzeichnet, dass** im Bereich mindestens eines der zumindest zwei Reißnahtabschnitte (80b) ein Stützelement (200) derart am Sitzbezug (90) befestigt ist, dass der diesen Reißnahtabschnitt (80b) durchtretende Gassackbereich (60c) durch das Stützelement abgestützt wird.

6. Fahrzeugsitz nach Anspruch 5, **dadurch gekennzeichnet, dass** das Stützelement am Sitzbezug (90) angenäht ist.

7. Fahrzeugsitz nach Anspruch 5 oder 6, **dadurch gekennzeichnet, dass** das Stützelement durch einen Stützsack (200) gebildet ist, wobei der Stützsack im Bereich des Reißnahtabschnittes (80b) derart am Sitzbezug befestigt ist, dass sich der den aufgerissenen Reißnahtabschnitt passierende Gassackbereich (60c) des Gassacks (50) in den Stützsack (200) hinein entfaltet und diesen dabei aus dem Sitzinneren nach außen herausstülpt.

8. Fahrzeugsitz nach einem der voranstehenden Ansprüche, **dadurch gekennzeichnet, dass** das unterschiedliche Aufreißverhalten der Reißnahtabschnitte zumindest auch darauf beruht, dass sich der Stichabstand der Nähte unterscheidet.

9. Fahrzeugsitz nach einem der voranstehenden Ansprüche, **dadurch gekennzeichnet, dass** das unterschiedliche Aufreißverhalten der Reißnahtabschnitte zumindest auch darauf beruht, dass die Reißnahtabschnitte mit einer unterschiedlichen Anzahl an Reißnähten ausgestattet sind.

10. Verfahren zum Schützen eines Fahrzeuginsassen, bei dem ein in einem Fahrzeugsitz (10) befindlicher Gassack (50) im Falle eines Unfalls aufgeblasen wird, wobei zumindest eine Reißnaht (80a, 80b) aufgerissen wird, durch die sich der Gassack (50) entfaltet, wobei mit dem Sitzbezug (90) eine Positionierung des sich entfaltenden oder des entfalteten Gassacks (50) durchgeführt wird,
**dadurch gekennzeichnet,**
**dass** die Positionierung mit zumindest einem nichtaufreißenden Sitzbezugabschnitt (100) durchgeführt wird, der zwei Reißnahtabschnitte (80a, 80b) voneinander trennt, indem zumindest ein Teilabschnitt (60b) des Gassacks (50) durch den nichtaufreißenden Sitzbezugabschnitt (100) im Inneren des Fahrzeugsitzes (10) zurückgehalten wird,
oder dass im Sitzbezug (90) zwei äußere Reißnahtabschnitte (300, 320) vorhanden sind, die durch einen dazwischen liegenden Reißnahtabschnitt (310) getrennt sind, wobei der dazwischen liegende Reißnahtabschnitt eine größere Aufreißkraft als die zwei äußeren Reißnahtabschnitte aufweist und wobei der dazwischen liegende Reißnahtabschnitt während des Entfaltens des Gassacks erst nach dem Aufreißen der zwei äußeren Reißnahtabschnitte aufreißt und zumindest einen Teilabschnitt (330) des Gassacks (50) während einer ersten Phase des Entfaltungsvorgangs des Gassacks zunächst im Inneren des Fahrzeugsitzes (10) zurückhält.

11. Verfahren nach Anspruch 10, **dadurch gekennzeichnet, dass** der Gassack (50) mit dem Sitzbezug (90) abgestützt wird.

12. Verfahren nach Anspruch 10 oder 11, **dadurch gekennzeichnet, dass** die Positionierung mit einem im Bereich der Reißnaht (80b) am Sitzbezug (90) befestigten Stützelement durchgeführt wird, indem mit diesem der die Reißnaht (80b) aufreißende Gassackbereich (60c) abgestützt wird.

13. Verfahren nach Anspruch 12, **dadurch gekennzeichnet, dass** das Stützelement am Sitzbezug (90) angenäht ist.

14. Verfahren nach Anspruch 12 oder 13, **dadurch gekennzeichnet, dass** die Positionierung mit einem Stützsack als Stützelement durchgeführt wird, der im Bereich der Reißnaht (80b) derart am Sitzbezug befestigt wird, dass sich der im Bereich des Stützsackes (200) befindliche Gassackbereich (60c) des Gassacks (50) in den Stützsack (200) hinein entfaltet und diesen dabei aus dem Sitzinneren (90) nach außen herausstülpt.

15. Verfahren nach Anspruch 10 oder 11, **dadurch gekennzeichnet, dass** die Positionierung außerdem mit mindestens einem Stützelement durchgeführt wird, das im Bereich eines der zumindest zwei Reißnahtabschnitte (80a, 80b) derart am Sitzbezug befestigt wird, dass der diesen Reißnahtabschnitt passierende Gassackbereich (60c) durch das Stützelement (200) abgestützt wird.

16. Verfahren nach Anspruch 15, **dadurch gekennzeichnet, dass** das Stützelement am Sitzbezug (90) angenäht ist.

17. Verfahren nach Anspruch 15 oder 16, **dadurch gekennzeichnet, dass** die Positionierung mit einem Stützsack (200) als Stützelement durchgeführt wird, indem der Stützsack im Bereich des Reißnahtabschnittes (80b) derart am Sitzbezug (90) befestigt wird, dass sich der den Reißnahtabschnitt passierende Gassackbereich (60c) des Gassacks (50) in den Stützsack (200) hinein entfaltet und diesen dabei nach außen herausstülpt.

18. Verfahren nach einem der voranstehenden Ansprüche 10 bis 17, **dadurch gekennzeichnet, dass** das unterschiedliche Aufreißverhalten der Reißnahtabschnitte zumindest auch darauf beruht, dass sich der Stichabstand der Nähte unterscheidet.

19. Verfahren nach einem der voranstehenden Ansprüche 10 bis 18, **dadurch gekennzeichnet, dass** das unterschiedliche Aufreißverhalten der Reißnahtabschnitte zumindest auch darauf beruht, dass die Reißnahtabschnitte mit einer unterschiedlichen Anzahl an Reißnähten ausgestattet sind.

## Claims

1. A vehicle seat with a lateral airbag device (40) with an airbag (50) which is mounted in a vehicle seat (10) below a seat cover (90) of the vehicle seat (10) and is inflated in the event of a vehicle accident, the seat cover (90) having at least one tear seam (70a, 70b) which is torn open by the deploying airbag (50) and permits the airbag (50) to emerge from the vehicle seat (10), wherein the seat cover (90) is configured in such a manner that it helps the deploying airbag (50) to come into a predetermined position, or keeps the deployed airbag (50) in the predetermined position,
**characterized in that**
in the seat cover (90) there are at least two tear seam sections (80a, 80b) which are separated by a non-tearing-open seat cover section (100), with at least a partial section (60b) of the airbag (50) being kept back in the interior of the vehicle seat (10) by the non-tearing-open seat cover section (100),
or that in the seat cover (90) there are two outer tear seam sections (300, 320) which are separated by a tear seam section (310) situated inbetween, the tear seam section which is situated inbetween having a greater tearing-open force than the two outer tear seam sections, and, during the deployment of the airbag, the tear seam section which is situated inbetween only tearing open after the two outer tear seam sections have been torn open, and initially keeping back at least a partial section (330) of the airbag (50) in the interior of the vehicle seat (10) during a first phase of the deployment operation of the airbag.

2. The vehicle seat as claimed in claim 1, **characterized in that** at least one supporting element is fastened to the seat cover in the region of the tear seam (80a, 80b) in such a manner that the airbag region (60) tearing open the tear seam (80b) is supported by the supporting element.

3. The vehicle seat as claimed in claim 2, **characterized in that** the supporting element is sewn to the seat cover (90).

4. The vehicle seat as claimed in claim 2 or 3, **characterized in that** the supporting element is formed by a supporting bag, the supporting bag being fastened to the seat cover in the region of the tear seam (80b) in such a manner that that airbag region (60c) of the airbag (50) which is assigned to the supporting bag (200) deploys into the supporting bag (200) and pushes the latter outward out of the interior of the seat.

5. The vehicle seat as claimed in claim 1, **characterized in that** a supporting element (200) is fastened to the seat cover (90) in the region of at least one of the at least two tear seam sections (80b) in such a manner that the airbag region (60c) passing through this tear seam section (80b) is supported by the supporting element.

6. The vehicle seat as claimed in claim 5, **characterized in that** the supporting element is sewn to the seat cover (90).

7. The vehicle seat as claimed in claim 5 or 6, **characterized in that** the supporting element is formed by a supporting bag (200), the supporting bag being fastened to the seat cover in the region of the tear seam section (80b) in such a manner that that airbag region (60c) of the airbag (50) which passes through the torn-open tear seam section deploys into the supporting bag (200) and pushes the latter outward out of the interior of the seat.

8. The vehicle seat as claimed in one of the preceding claims, **characterized in that** the different tearing-open behavior of the tear seam sections is at least also based on the fact that the stitch spacing of the seams differs.

9. The vehicle seat as claimed in one of the preceding claims, **characterized in that** the different tearing-open behavior of the tear seam sections is at least also based on the fact that the tear seam sections are provided with a different number of tear seams.

10. A method for protecting a vehicle occupant, in which an airbag (50) situated in a vehicle seat (10) is inflated in the event of an accident, with at least one tear seam (80a, 80b) being torn open, through which the airbag (50) deploys, wherein a positioning of the deploying or of the deployed airbag (50) is carried out by the seat cover (90), **characterized in that**
the positioning is carried out by at least one non-tearing-open seat cover section (100) which separates two tear seam sections (80a, 80b) from each other by at least one partial section (60b) of the airbag (50) being kept back in the interior of the vehicle seat (10) by the non-tearing-open seat cover section (100),
or that in the seat cover (90) there are two outer tear seam sections (300, 320) which are separated by a tear seam section (310) which is situated inbetween, the tear seam section which is situated inbetween having a greater tearing-open force than the two outer tear seam sections, and, during the deployment of the airbag, the tear seam section which is situated inbetween only tearing open after the two outer tear seam sections have been torn open, and initially keeping back at least a partial section (330) of the airbag (50) in the interior of the vehicle seat (10) during a first phase of the deployment operation of the airbag.

11. The method as claimed in claim 10, **characterized in that** the airbag (50) is supported by the seat cover (90).

12. The method as claimed in claim 10 or 11, **characterized in that** the positioning is carried out by a supporting element fastened to the seat cover (90) in the region of the tear seam (80b) by the airbag region (60c) tearing open the tear seam (80b) being supported by said supporting element.

13. The method as claimed in claim 12, **characterized in that** the supporting element is sewn to the seat cover (90).

14. The method as claimed in claim 12 or 13, **characterized in that** the positioning is carried out by a supporting bag as supporting element which is fastened to the seat cover in the region of the tear seam (80b) in such a manner that that airbag region (60c) of the airbag (50) which is situated in the region of the supporting bag (200) deploys into the supporting bag (200) and pushes the latter outward out of the interior (90) of the seat.

15. The method as claimed in claim 10 or 11, **characterized in that** the positioning is also carried out by at least one supporting element which is fastened to the seat cover in the region of one of the at least two tear seam sections (80a, 80b) in such a manner that the airbag region (60c) passing through this tear seam section is supported by the supporting element (200).

16. The method as claimed in claim 15, **characterized in that** the supporting element is sewn to the seat cover (90).

17. The method as claimed in claim 15 or 16, **characterized in that** the positioning is carried out by a supporting bag (200) as supporting element by the supporting bag being fastened to the seat cover (90) in the region of the tear seam section (80b) in such a manner that that airbag region (60c) of the airbag (50) which passes through the tear seam section deploys into the supporting bag (200) and pushes the latter outward.

18. The method as claimed in one of the preceding claims 10 to 17, **characterized in that** the different tearing-open behavior of the tear seam sections is at least also based on the fact that the stitch spacing of the seams differs.

19. The method as claimed in one of the preceding claims 10 to 18, **characterized in that** the different tearing-opening behavior of the tear seam sections is at least also based on the fact that the tear seam sections are provided with a different number of tear seams.

## Revendications

1. Siège de véhicule comprenant un système d'airbag latéral (40) avec un coussin gonflable (50) monté dans le siège de véhicule (10) au-dessous d'un habillage de siège (90) du siège de véhicule (10) et qui est gonflé dans le cas d'un accident du véhicule, dans lequel l'habillage de siège (90) comprend au moins une couture déchirable (70a, 70b) qui est déchirée par un coussin gonflable (50) qui se déploie et qui permet une sortie du coussin gonflable (50) hors du siège de véhicule (10), dans lequel l'habillage de siège (90) est conçu de telle manière qu'il aide le coussin gonflable (50) qui se déploie à venir dans une position prédéterminée, ou qu'il maintient le coussin gonflable (50) déployé dans la position prédéterminée,
**caractérisé en ce que**
il est prévu dans l'habillage de siège (90) au moins deux tronçons de couture déchirable (80a, 80b) qui sont séparés par un tronçon d'habillage de siège (100) non déchirable, où au moins un tronçon partiel (60b) du coussin gonflable (50) est retenu à l'intérieur du siège de véhicule (10) par le tronçon d'habillage de siège (100) non déchirable,
ou qu'il est prévu dans l'habillage de siège (90) deux tronçons de couture déchirable extérieurs (300, 320), qui sont séparés par un tronçon de couture déchirable (310) intermédiaire, le tronçon de couture déchirable intermédiaire présentant une force de déchirement plus élevée que les deux tronçons de couture déchirable extérieurs, et le tronçon de couture déchirable intermédiaire se déchirant pendant le déploiement du coussin gonflable uniquement après le déchirement des deux tronçons de couture déchirable extérieurs et retient au moins un tronçon partiel (330) du coussin gonflable (50) tout d'abord à l'intérieur du siège de véhicule (10) pendant une première phase du processus de déploiement du coussin gonflable.

2. Siège de véhicule selon la revendication 1, **caractérisé en ce qu'**au moins un élément de soutien est fixé dans la région de la couture déchirable (80a, 80b) de telle façon que la région du coussin gonflable (60) qui déchire la couture déchirable (80b) est soutenue par l'élément de soutien.

3. Siège de véhicule selon la revendication 2, **caractérisé en ce que** l'élément de soutien est cousu sur l'habillage de siège (90).

4. Siège de véhicule selon la revendication 2 ou 3, **caractérisé en ce que** l'élément de soutien est formé par un sac de soutien, ledit sac de soutien étant fixé dans la région de la couture déchirable (80b) sur l'habillage de siège de telle façon que la région (60c) du coussin gonflable (50) associée au sac de soutien (200) se déploie en entrant dans le sac de soutien (20) et fait ici retrousser celui-ci hors de l'intérieur du siège vers l'extérieur.

5. Siège de véhicule selon la revendication 1, **caractérisé en ce que** dans la région de l'un au moins desdits au moins deux tronçons de couture déchirable (80b) est fixé un élément de soutien (20) sur l'habillage de siège (90) de telle manière que la région du coussin gonflable (60c) qui traverse le tronçon de couture déchirable (80b) est soutenue par l'élément de soutien.

6. Siège de véhicule selon la revendication 5, **caractérisé en ce que** l'élément de soutien est cousu sur l'habillage de siège (90).

7. Siège de véhicule selon la revendication 5 ou 6, **caractérisé en ce que** l'élément de soutien est formé par un sac de soutien (20), ledit sac de soutien étant fixé dans la région du tronçon de couture déchirable (80b) sur l'habillage de siège de telle manière que la région du coussin gonflable (60c) qui passe au-delà du tronçon de couture déchirable déchiré du coussin gonflable (50) se déploie en entrant dans le sac de soutien (200) et fait ici retrousser celui-ci hors de l'intérieur du siège vers l'extérieur.

8. Siège de véhicule selon l'une des revendications précédentes, **caractérisé en ce que** la différence de comportement de déchirement des tronçons de couture déchirable est au moins également basée sur le fait que la distance des points des coutures est différente.

9. Siège de véhicule selon l'une des revendications précédentes, **caractérisé en ce que** la différence de comportement de déchirement des tronçons de couture déchirable est au moins également basée sur le fait que les tronçons de couture déchirable sont dotés d'un nombre différent de coutures déchirables.

10. Procédé pour protéger un occupant de véhicule dans lequel un coussin gonflable (50) qui se trouve dans un siège du véhicule (10) est gonflé dans le cas d'un accident, cependant qu'au moins une couture déchirable (80a, 80b) est déchirée, et le coussin gonflable (50) se déploie à travers celle-ci, et avec l'habillage de siège (90) on effectue un positionnement du coussin gonflable (50) déployé ou en cours de déploiement,
**caractérisé en ce que**
le positionnement est effectué avec au moins un tronçon d'habillage de siège non déchirable (100), qui sépare deux tronçons de couture déchirable (80a, 80b) l'un par rapport à l'autre, du fait qu'au moins un tronçon partiel (60b) du coussin gonflable (50) est retenu à l'intérieur du siège de véhicule (10) par le tronçon d'habillage de siège (100) non déchirable,
ou ce que dans l'habillage de siège (90) sont prévus deux tronçons de couture déchirable extérieurs (300, 301) qui sont séparés par un tronçon de couture déchirable (310) intermédiaire, le tronçon de couture déchirable intermédiaire présentant une force de déchirement plus élevée que les deux tronçons de couture déchirable extérieurs, et le tronçon de couture déchirable intermédiaire se déchirant pendant le déploiement du coussin gonflable uniquement après le déchirement des deux tronçons de couture déchirable extérieurs et retient au moins un tronçon partiel (330) du coussin gonflable (50) tout d'abord à l'intérieur du siège de véhicule (10) pendant une première phase du processus de déploiement du coussin gonflable.

11. Procédé selon la revendication 10, **caractérisé en ce que** le coussin gonflable (50) est soutenu avec l'habillage de siège (90).

12. Procédé selon la revendication 10 ou 11, **caractérisé en ce que** le positionnement est effectué avec un élément de soutien fixé sur l'habillage de siège (90) dans la région de la couture déchirable (80b), **en ce que** la région du coussin gonflable (60c) qui déchire la couture déchirable (80b) est soutenue par cet élément de soutien.

13. Procédé selon la revendication 12, **caractérisé en ce que** l'élément de soutien est cousu sur l'habillage de siège (90).

14. Procédé selon la revendication 12 ou 13, **caractérisé en ce que** le positionnement est effectué avec un sac de soutien à titre d'élément de soutien, lequel est fixé sur l'habillage de siège dans la région de la couture déchirable (80b) de telle façon que la région (60c) du coussin gonflable (50) qui se trouve dans la région du gaz de soutien (200) se déploie en entrant dans le sac de soutien (200) et fait ici retrousser celui-ci hors de l'intérieur du siège (90) vers l'extérieur.

15. Procédé selon la revendication 10 ou 11, **caractérisé en ce que** le positionnement est effectué en outre avec au moins un élément de soutien qui est fixé sur l'habillage de siège dans la région de l'un desdits au moins deux tronçons de couture déchirable (80a, 80b) de telle façon que la région de coussin gonflable (60c) qui passe au-delà de ce tronçon de couture déchirable est soutenue par l'élément de soutien (200).

16. Procédé selon la revendication 15, **caractérisé en ce que** l'élément de soutien est cousu sur l'habillage de siège (90).

17. Procédé selon la revendication de 15 ou 16, **caractérisé en ce que** le positionnement est effectué avec un sac de soutien (200) à titre d'élément de soutien, du fait que le sac de soutien est fixé sur l'habillage de siège (90) dans la région du tronçon de couture déchirable (80b) de telle façon que la région (60c) du coussin gonflable (50) qui passe au-delà du tronçon de couture déchirable se déploie en entrant dans le sac de soutien (200) et fait ici retrousser celui-ci vers l'extérieur.

18. Procédé selon l'une des revendications précédentes 10 à 17, **caractérisé en ce que** la différence du comportement de déchirement des tronçons de couture déchirable est au moins également basée sur le fait que la distance des points des coutures est différente.

19. Procédé selon l'une des revendications précédentes 10 à 18, **caractérisé en ce que** la différence du comportement de déchirement des tronçons de couture déchirable est au moins également basée sur le fait que les tronçons de couture déchirable sont dotés d'un nombre différent de coutures déchirables.
